# EUROPEAN PATENT APPLICATION

(11) **EP 3 594 655 A1**
(43) Date of publication of application: **15.01.2020**
(21) Application number: 18183004.3
(22) Date of filing: 11.07.2018
(51) Int. Cl.: G01N 1/14, B01L 3/02, G01N 35/10

(54) **ELECTRONIC STERILISABLE PIPETTING DEVICE**

(71) Applicant: INFYS sprl, 6150 Anderlues (BE)
(72) Inventor: El-Fajjouchi, Billal, 6010 Couillet (BE); Baran, Ismail, 6150 Anderlues (BE)
(74) Representative: ABYOO

(57) **Abstract**

The invention relates to an electronic or hybrid pipetting device (1) operating by air displacement, comprising a motor associated to a pump, a battery for supplying electrical energy and an electronic control unit, wherein the motor, the battery and the electronic control unit are received in a cartridge (13) disposed in a compartment (11) of the device (1), said compartment (11) being closable by means of a lid (15). The invention also relates to a cartridge (13) for use in said device (1).

## Description

The invention relates to fluid dispensing devices, also known as laboratory pipette apparatuses, pipettors or pipetting devices, for aspiration and dispensing of fluids into receptacles or similar. More particularly, it relates to electronic or hybrid pipetting devices that comprise an electronic measurement and validation system of the amount of fluid that is actually aspirated and dispensed.

A pipetting device or fluid dispensing device is a device commonly used in laboratories to aspirate and dispense fluids easily, efficiently and safely. The need for accuracy in the aspiration and dispensing of such samples has led to the use of differently sized graduated pipettes that are specifically suited for a given type of fluid. The pipettes' limited aspirating capacity prevents from receiving too much of a given sample. Subsequently, in general, the sample does not contaminate the pipetting device through a direct contact.

However, accidental contaminations may happen through direct contact with the liquid or the fluid that is to be dispensed, or through aerosols during prolonged use of the pipetting device. It is then mandatory to clean it. Several types of sterilisation methods can be used according to the material to be treated. Physical-based methods comprise the use of both humid and dry heat as well as radiations, while chemical-based methods comprise the use of gases other than water vapour, as well as various disinfectant liquids.

To that end, the document US2008/0184823 discloses a multi-channel pipetting device comprising two parts, a lower one and an upper one, each fitted with complementary means of assembly. The pipetting device can be fitted in an autoclave both in an assembled or disassembled manner, without taking precautionary measures since it does not comprise an integrated circuit, and only employs mechanical means for pipetting.

To accurately determine the amount of liquid being aspirated or dispensed, it is more and more frequent to employ pipetting devices that comprise a motorized pump. Document US5509318 references a handheld automatic portable pipetting device that employs a standard glass or plastic pipette, in order to aspire and dispense a predetermined amount of liquid. The device comprises a housing, which carries within a pipette holder, an electric motor, a peristaltic pump driven by said motor, at least one battery, conduits connecting the pump to the said support, and control means to activate the motor and the pump. Such a device cannot be sterilised in an autoclave.

Some motorized pipetting devices are also equipped with a programmable electronic module that ensures the repeatability of the pipetting operations. For instance, document EP1531004 refers to a handheld gun-shaped portable pipetting device. The gun-shaped housing is divided into two portions, a "handle portion" (comprising a pump and an optional battery) and "main housing portion" (comprising the electronic control unit). Those two portions are divided by a plate that comprises an integrated circuit. The pump is electrically connected to the electronic control unit through a command circuit for the conventional motor, found on the surface of said integrated circuit. Here, the battery is not mandatory because the electronic pipetting device can be powered by an external source.

Document WO2009067834 refers to a hand-held pipetting device wherein specific aspirating and dispensing volumes of fluid can be adjusted. The device comprises a housing and a pipette holder for a replaceable pipette. The housing contains a positive pressure source for dispensing an aspirated fluid, a valve mechanism that is electrically controlled and is disposed within an air conduit between the positive pressure source and the pipette holder, an electronic controller and an input device for inputting a desired volume to be dispensed. The controller is intended to linearly calculate a dispensing time from the desired volume to be dispensed.

Traditionally, electronic pipetting devices can be cleaned and decontaminated with disinfectant liquids such as 70% ethanol, 60% isopropanol, a soft detergent or another similar product, while ensuring that the pipetting device's materials are chemically compatible with the disinfecting solution.

Nevertheless, such treatment is not satisfactory enough for a sterile use of the pipetting device. Sterilisation comprises every process through which micro-organisms such as fungi, bacteria, viruses and spores are killed. However, it's not possible to introduce electronic devices into an autoclave-type steriliser without damaging them. A solution remains to be found to improve sterilisation of electronic pipetting devices.

Document US2009117009 relates to a multi-channel electronic pipetting device featuring a removable lower assembly, and an upper gripping assembly comprising a motor and an electronic control unit. Its two-part architecture is due to the fact that certain components, such as the motor, are sensitive to autoclaving operations. Thus, the lower part can be taken apart and autoclaved independently of the upper part of said device. In order to balance the air volume associated with each channel, an air control chamber is added next to them.

This solution is interesting but does not allow the sterilisation of the entire device. When the two parts are joined back together after the autoclaving step, there is a remaining risk of contamination of the sterile portion by the handle that has not undergone the sterilisation treatment, or only an insufficient sterilisation treatment. It is desirable to find a solution where the risks of contamination are minimal, both for the part coming into contact with the pipette, as well as for the part intended to be handled by the user.

One of the objectives of the invention is to provide a solution to the drawbacks encountered in the prior art. Particularly, one of the objectives of the invention is to provide a new electronic or hybrid pipetting device that can be efficiently sterilised through physical sterilisation methods such as autoclaving.

To this end, and according to a first aspect, the invention relates to an electronic or hybrid pipetting device comprising a motor associated to a pump, a battery for supplying electrical energy and an electronic control unit, the device being remarkable in that the motor, the battery and the electronic control unit are housed in a cartridge disposed in a compartment of the device, said compartment being closable by means of a lid.

As one can understand from the above definition, the invention is remarkable in that it includes, inside a cartridge, all the parts of the device that may be damaged by sterilisation in a humid and/or hot environment, such as in an autoclave sterilisation chamber. When using the device, the cartridge is disposed in a closed compartment, so as to avoid any contact with the surrounding environment, which avoids or at least minimizes the risk of contamination. This is why, according to the preferred embodiment, the lid of the compartment comprises sealing means for hermetically sealing the compartment. Preferably, the sealing means comprise a sealing lip made of an elastomeric material.

Preferably, the cartridge is a removable cartridge, so that the cartridge is removable from the compartment. Such configuration is advantageous since the cartridge can be removed from the device during its sterilisation to be preserved. After the sterilisation of the rest of the device, the cartridge is put back into the compartment which is then closed by the lid. Therefore, the cartridge that has not foregone the sterilisation step does not enter into contact with the user and the contamination risk is minimized.

Preferentially, the cartridge is hermetically sealed. The use of an airtight and/or waterproof cartridge allows to leave it within the device during the sterilisation of the latter or to sterilise it using other means, apart from the remaining parts of the device.

Preferably, the compartment comprises a drawer to ease the insertion and the removal of the cartridge. Optionally, the drawer having side walls, one side walls of the drawer forms the lid of the compartment.

In an embodiment, the device is operating by air displacement. Preferably or alternatively, the pump is a diaphragm pump, also called membrane pump. Preferentially, the motor is connected to an axis of actuation of the diaphragm, moveable along its longitudinal direction, between a retracted position where the axis is received into the cartridge, and at least one deployed position of actuation of the diaphragm of the diaphragm pump.

Advantageously, the axis of actuation of the diaphragm comprises a contact disk on one end intended to be in contact with the diaphragm of the diaphragm pump. This configuration reduces the risk of piercing said diaphragm.

Ideally, the device is configured so that the motor moves the axis to the retracted position when the device is shut down, and/or when the compartment's lid is opened and /or when the drawer is pulled out of the compartment. This configuration allows limiting the risk of damaging the axis or the diaphragm when the cartridge is removed from its receiving compartment or when the cartridge is placed inside the said compartment.

Optionally, at least one positioning magnet is disposed on a support of the diaphragm and arranged on the periphery of said diaphragm, and the cartridge comprises at least one complementary positioning magnet arranged close to the axis of actuation, the two magnets being able to cooperate to ensure the alignment of the axis relative to the diaphragm when the cartridge is disposed in the compartment. This configuration is advantageous in that it allows a precise final positioning of the cartridge with respect to the diaphragm.

Optionally, the device comprises a removable cartridge wherein the cartridge is inserted into the compartment in its longitudinal direction, directly or by means of a drawer, and the axis of actuation is deployed in a direction not parallel to the direction of insertion of the said cartridge.

Advantageously, the compartment and/or the drawer receiving the cartridge have side walls, the device is remarkable in that at least one of the side walls comprises an opening aligned with the diaphragm and dimensioned for the passage of the axis of actuation of the diaphragm.

According to a preferred embodiment, the cartridge comprises control means to control the aspiration speed of the device. For instance, the control means comprise at least one button, or at least two buttons, arranged on the surface of the cartridge so they can be operated by the user in a direct or indirect way.

Preferably, the compartment and/or the drawer receiving the cartridge having side walls, the device is remarkable in that at least a portion of at least one side wall facing the control means is made of a flexible and transparent material, so as to allow the control means to be actuated directly through said side wall.

In an embodiment wherein the cartridge is removable, the compartment comprises a drawer to ease the insertion and the removal of the said cartridge.

Preferentially, the compartment or the drawer comprises foolproofing means cooperating with complementary foolproofing means on the cartridge.

Additionally, or alternatively, the compartment or the drawer comprises elastic means to hold the cartridge in place and/or eject it, at least partially, in order to make its removal easier.

According to a second aspect, the invention relates to a cartridge for use in an electronic or hybrid pipetting device according to the first aspect, the cartridge comprising a motor that is intended to be associated with a pump present in said device, a battery and an electronic control unit. Preferably, the cartridge is hermetically sealed.

According to a preferred embodiment, the electronic or hybrid pipetting device comprising a pump diaphragm, the cartridge is remarkable in that it comprises an housing and in that the motor comprises an axis of actuation of a diaphragm of the diaphragm pump moveable along its longitudinal direction, between a retracted position where the axis is received into the housing, and at least one deployed position of actuation of the diaphragm of the diaphragm pump where one end of the axis exits the housing.

Preferably, the axis of actuation of the diaphragm comprises a contact disk on its end intended to be in contact with the diaphragm of the diaphragm pump.

Preferentially, the cartridge comprises at least one positioning magnet arranged close to the axis of actuation.

According to one embodiment, the cartridge comprises control means to control the aspiration speed of the device. For instance, the control means comprise at least one button, or at least two buttons, arranged on the surface of the cartridge, so they can be operated by the user in a direct or indirect way.

Preferably, the battery is a rechargeable battery.
The invention will be well understood, and other aspects and advantages will appear after reading the description that follows, given as an example and referring to the accompanying drawings among which:
- Figure 1 shows an exploded view of a device according to the invention.
- Figure 2 shows a transversal section of a device according to the invention.
- Figure 3 shows a view of a cartridge intended to be mounted in a device according to the invention.
- Figure 4 shows an embodiment of the invention wherein the compartment comprises a drawer.

In the description that follows, the term "comprise" is synonymous with "include" and is not limiting in that it allows the presence of other elements in the device to which it relates. The same references depict identical or similar elements in the different figures.

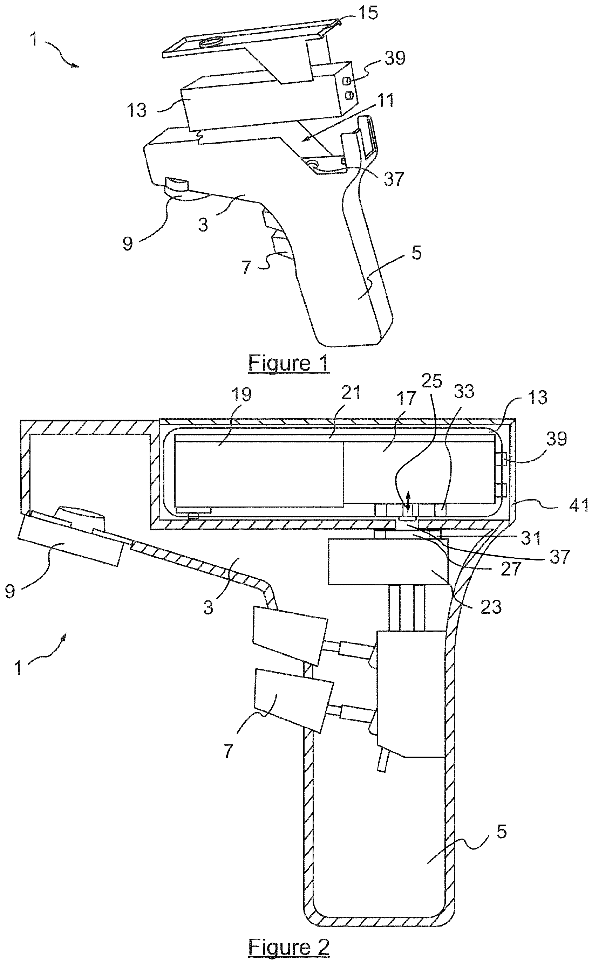

Figure 1 shows an electronic or hybrid pipetting device 1 according to an embodiment of the invention, preferably operating by air displacement. The pipetting device 1 can be an electronic pipetting device or a hybrid pipetting device. However, in accordance with the invention, both the electronic and the hybrid pipetting device comprise an electronic unit.

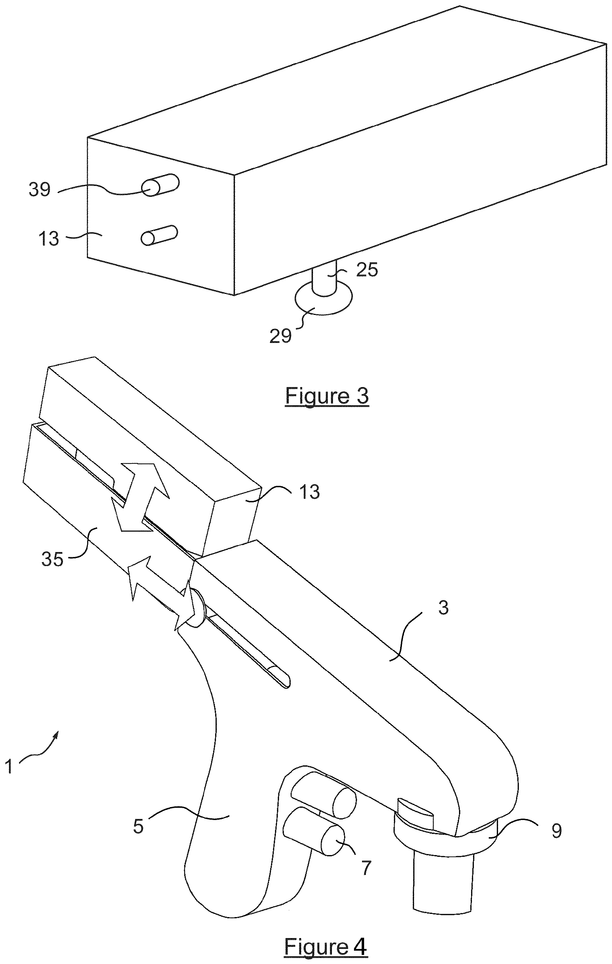

The device 1 is presented in an exploded view showing a body 3 being gun-shaped and comprising a handle 5, actuating means 7 of the device 1 and a pipette holder 9. The body 3 also comprises a compartment 11 in which a cartridge 13 is mounted. The compartment 11 is closed by a lid 15, so as to isolate the cartridge 13 from its surrounding environment when inside the compartment 11. In this example, the lid 15 closes the compartment 11 by the upper part of the device 1, but other configurations can be envisaged by the person skilled in the art, such as an opening closed by the lid, located on the side of the device or a compartment located in the device's handle. In an embodiment shown in figure 4, the compartment comprises a drawer 35 designed to receive the cartridge 13, that can be pulled out of the compartment from one side.

Going back to figure 1, it is understood that, according to an embodiment, said cartridge 13 is mounted in a removable manner inside the compartment 11 of the device 1. Then, when the user wishes to sterilise the device 1, he/she merely has to remove the cartridge 13 and put the remaining parts of the device 1, i.e. the lid 15 and the device body 3, in an autoclave chamber. When the device 1 is in use, the cartridge 13 is not in direct contact with the user and/or the surrounding environment as it is inside the compartment 11.

According to one embodiment, the lid 15 of the compartment 11 comprises sealing means (not shown), for a sealed closure of said compartment 11. Preferably, the sealing means comprise a sealing lip (not shown) made of an elastomeric material. Airtight and waterproof sealing lips are well known to the person skilled in the art and won't be described further. However, it is noted that the material must be chosen to withstand sterilisation temperatures in an autoclave.

This configuration allows limiting the risks of contamination of the cartridge 13 by the surrounding environment while using the device 1. It may also allow to avoid the need to remove the cartridge 13 from the compartment 11 during the sterilisation of the electronic or hybrid pipetting device 1, when such cartridge is removable. Indeed, alternatively, or in a complementary manner, the cartridge 13 is hermetically sealed. Thanks to the hermetical seal of the lid 15 of the compartment 11, and/or due to the airtight and waterproof nature of the cartridge 13, the entire device 1 including the cartridge 13 can be autoclaved for sterilisation. In such configuration, it is not necessary for the cartridge to be removable. Nevertheless, it is also possible to remove the cartridge 13 from the device 1 during the autoclaving operation.

Referring to figure 2, it can be seen that the cartridge 13 according to the invention comprises a motor 17, a battery 19 for supplying electrical energy and an electronic control unit 21. It is understood that all the sensitive elements such as the motor 17, the battery 19 and the electronic control unit 21 present inside said cartridge 13 are protected from the sterilisation conditions or are removable from the device together with the cartridge 13. Conduits are not represented on figure 2.

Preferably, the battery 19 is a rechargeable battery, such as a nickel-metal hybrid battery or lithium-based battery. Ideally, the cartridge 13 comprises connecting means to connect the battery 19 for charging it with electrical energy while remaining inside the cartridge. Typically, a regulator has to be used to connect sealed rechargeable batteries with a charging source. Its role is to regulate the electrical current flowing to the battery and to prevent the electrical current from flowing back from the battery towards the power source. In an embodiment, the battery 19 is configured to be rechargeable by inductive charging.

The motor 17 located in the cartridge 13 is associated with a pump 23 located in the body 3. Preferably, the pump 23 is a diaphragm pump. Diaphragm pumps are known to the person skilled in the art and are commercially available. Therefore, they will not be described any further. However, they specifically need to feature an oscillating diaphragm. The diaphragm's oscillation can be generated by an eccentric powered by a motor, a piston, a linear motor, an electromagnetic vibration, or actuated by compressed air. It is underlined that in a preferred embodiment of the invention, the diaphragm pump 23 is separated from the motor to actuate the diaphragm. Indeed, the motor 17 is located in the cartridge 13, whereas the diaphragm pump 23 is located outside said cartridge 13, and even outside the compartment 11.

According to the invention, motor 17 is connected to an axis 25 of actuation of the diaphragm 27, creating a piston that moves along its longitudinal axis. The axis 25 of actuation moves from a retracted position where the axis 25 of actuation is received into the cartridge 13, and at least one deployed position of actuation of the diaphragm 27 of the diaphragm pump 23. Preferably, the axis 25 of actuation comprises a contact disk 29 on its end (also visible on figure 3), intended to be in contact with the diaphragm 27 of the pump 23. Preferably, the electronic control unit 21 is set up to drive motor 17 to automatically bring the axis back to its retracted position, when the user requests the shutdown of the device 1 and/or it receives an information indicating that the lid 15 of the compartment 11 is open.

According to a preferred embodiment of the invention, the positioning of the motor 17 inside the compartment 11, and/or inside the drawer 35, allows a proper coupling between the latter and the pump 23, which is ensured by positioning means (31, 33), such as positioning magnets. At least one positioning magnet 31 is located on the support of the diaphragm 27 of the diaphragm pump 23 and can, for instance, take on a ring shape around the periphery of the said diaphragm 27. Cartridge 13 comprises at least one complimentary 33 positioning magnet, located next to the axis 25 of actuation, which can also take on a ring shape. The two magnets (31, 33) are located so as to face one another when the cartridge 13 is fitted inside the compartment 11. They are able to cooperate to ensure that the axis 25 is aligned with the diaphragm 27. The person skilled in the art may also consider other means for positioning the cartridge 13 into the compartment 11 and/or into the drawer 35. However, the use of magnets allows both a precise alignment between the axis 25 and diaphragm 27 and an easy insertion and, according to an embodiment, an easy removal of the cartridge 13 inside the compartment 11 thanks to the presence of a tolerance between the inner walls of compartment 11 and the outer surface of cartridge 13.

According to a preferred embodiment represented in figure 4, the cartridge 13 is inserted into the compartment along its longitudinal axis, and the axis is deployed in a way that is not parallel to the cartridge's direction of insertion.

According to a preferred embodiment, illustrated in figure 4, the cartridge 13 is inserted into the compartment by means of a drawer 35. Preferably, one of the side walls of the drawer 35 forms the lid 15 of the compartment.

It is understood that one aspect of the invention relates to the decoupling of the motor 17 and the pump 23. The pump 23 is located inside the device's body 3, for instance inside the handle 5. The motor 17 is located inside the cartridge 13. This is why, the compartment 11 on its side wall facing the pump 23 advantageously comprises an opening 37 (which can be seen on figure 1) aligned with the diaphragm 27 of diaphragm pump 23. In case the compartment comprises a drawer said opening is present on the side wall of the drawer. Said opening 37 shows a suitable diameter so that the axis 25 and the contact disk 29 can fit.

In a preferred embodiment, the pump 23 is arranged to hermetically close said opening 37 and thus, the compartment 11. This configuration is advantageous in that it prevents any contamination of the cartridge 13 by the aerosol that may be present in the body 3 of the device 1. It also allows keeping the cartridge 13 in the compartment 11 during the autoclaving operations when the lid 15 comprises sealing means.

Other means for actuating the pump 23 by the motor 17 without the need for an opening in the compartment's wall may also be considered, such as electromagnetic means of actuation, for instance.

Optionally, the compartment 11 or the drawer 35 of the compartment 11 comprises foolproofing means (not represented) cooperating with complementary foolproofing means of the cartridge 13, so that cartridge 13 is inserted in the right way. Alternatively, or complementarily, compartment 11, or the drawer 35 of the compartment 11, comprises elastic means (not represented) set up to hold the cartridge 13 in place and/or eject it, at least partially, in order to facilitate its removal from the device 1.

According to a preferred implementation, the cartridge 13 comprises control means 39 of the aspiration speed. Those control means are, for instance, shaped in the form of command buttons driving the motor 17 through the electronic control unit 21. The buttons are advantageously located on the surface of the cartridge 13 and can be operated by the user either indirectly or directly. When they are directly operated, the portion 41 of the wall of the compartment 11 or of the lid 15, placed opposite the control means 39, will advantageously be made out of a flexible and transparent material, so as to be able to actuate the control means 39 through it, from the outside of the compartment 11. According to a preferred implementation that is not represented here, the device comprises intermediate buttons located either on the wall of the compartment or on the lid facing the control means for indirect operation.

## Claims

1. Electronic or hybrid pipetting device (1) comprising a motor (17) associated to a pump (23), a battery (19) for supplying electrical energy and an electronic control unit (21), the device (1) being **characterised in that** the motor (17), the battery (19) and the electronic control unit (21) are housed in a cartridge (13) disposed in a compartment (11) of the device (1), with preference, said compartment (11) being closable by means of a lid (15).

2. Electronic or hybrid pipetting device (1) according to claim 1, **characterised in that** the lid (15) of the compartment (11) comprises sealing means for hermetically sealing the compartment (11); preferably, the sealing means comprise a sealing lip made of an elastomeric material.

3. Electronic or hybrid pipetting device (1) according to claim 1 or 2, **characterised in that** the cartridge (13) is a removable cartridge (13).

4. Electronic or hybrid pipetting device (1) according to any one of claim 1 to 3, **characterised in that** the cartridge (13) is hermetically sealed, and/or **in that** the compartment comprises a drawer (35) to ease the insertion and the removal of the cartridge (13); preferably the drawer (35) having side walls, one side wall of the drawer (35) forms the lid (15) of the compartment (11).

5. Electronic or hybrid pipetting device (1) according to any one of the claims 1 to 4, **characterised in that** the device (1) is operating by air displacement and/or **in that** the pump (23) is a diaphragm pump.

6. Electronic or hybrid pipetting device (1) according to claim 5, **characterised in that** the motor (17) is connected to an axis (25) of actuation of the diaphragm (27), moveable along its longitudinal direction, between a retracted position where the axis (25) is received into the cartridge (13), and at least one deployed position of actuation of the diaphragm (27) of the diaphragm pump (23); preferably, the axis (25) of actuation of the diaphragm (27) comprises a contact disk (29) on one end intended to be in contact with the diaphragm (27) of the diaphragm pump (23).

7. Electronic or hybrid pipetting device (1) according to claim 6, **characterised in that** the device (1) is configured so that the motor (17) moves the axis (25) to the retracted position when the device (1) is shut down, and/or when the compartment's lid (15) is opened, and/or when the drawer (35) is pulled out of the compartment (11).

8. Electronic or hybrid pipetting device (1) according to any one of claims 5 to 7, **characterised in that** at least one positioning magnet (31) is disposed on a support of the diaphragm (27) and arranged on the periphery of said diaphragm (27), and the cartridge (13) comprises at least one complementary positioning magnet (33) arranged close to the axis (25) of actuation, the two magnets (31, 33) being able to cooperate to ensure the alignment of the axis (25) relative to the diaphragm (27) when the cartridge (13) is disposed in the compartment (11).

9. Electronic or hybrid pipetting device (1) according to any one of the claims 5 to 8, **characterised in that** the cartridge (13) is inserted into the compartment (11) in its longitudinal direction, directly or by means of a drawer (35), and **in that** the axis (25) of actuation is deployed in a direction not parallel to the direction of insertion of said cartridge (13).

10. Electronic or hybrid pipetting device (1) according to any one of the claims 5 to 9, the compartment (11) and/or the drawer (35) receiving the cartridge (13) having side walls, the device (1) is **characterised in that** at least one of the side walls comprises an opening (37) aligned with the diaphragm (27) and dimensioned for the passage of the axis (25) of actuation of the diaphragm (27).

11. Electronic or hybrid pipetting device (1) according to any one of the claims 1 to 10 **characterised in that** the cartridge (13) comprises control means (39) to control the aspiration speed of the device (1), preferably the control means (39) comprise at least one button arranged on the surface of the cartridge (13).

12. Electronic or hybrid pipetting device (1) according to claim 11, the compartment (11) and/or the drawer (35) receiving the cartridge (13) having side walls, the device (1) is **characterised in that** at least a portion of at least one side wall (41) facing the control means (39) is made of a flexible and transparent material, so as to allow the control means (39) to be actuated directly through said side wall (41).

13. Electronic or hybrid pipetting device (1) according to any one of claims 3 to 12 comprising a removable cartridge, **characterised in that** the compartment (11) or the drawer (35) comprises foolproofing means cooperating with complementary foolproofing means on the cartridge (13) ; and/or the compartment (11) or the drawer (35) comprises elastic means to hold the cartridge (13) in place and/or eject it, at least partially, in order to make its removal easier.

14. Cartridge (13) for use in an electronic or hybrid pipetting device (1) according to any one of claims 1 to 13, **characterised in that** the cartridge (13) comprises a motor (17) that is intended to be associated with a pump (23) present in said device (1), a battery (19) and an electronic control unit (21); preferably, the cartridge (13) is hermetically sealed.

15. Cartridge (13) according to claim 14, the electronic or hybrid pipetting device (1) comprising a pump diaphragm (23), the cartridge (13) is **characterised in that** it comprises an housing and **in that** the motor (17) comprises an axis (25) of actuation of the diaphragm (27) of the diaphragm pump (23) movable along its longitudinal direction, between a retracted position where the axis (25) is received into the housing, and at least one deployed position of actuation of the diaphragm (27) of the diaphragm pump (23) where one end of the axis (25) exits the housing; preferentially, the cartridge (13) comprises at least one positioning magnet (33) arranged close to the axis (25) of actuation.
